# EUROPEAN PATENT APPLICATION

(11) **EP 3 370 211 A1**
(43) Date of publication of application: **05.09.2018**
(21) Application number: 18156072.3
(22) Date of filing: 09.02.2018
(51) Int. Cl.: G07G 1/00, G06F 3/01, G06F 3/0482

(54) **POINT-OF -SALE TERMINAL**

(30) Priority: 03.03.2017 JP 2017040940
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, Tokyo 141-8562 (JP); GOTOU, Chikashi, Shinagawa-ku,, Tokyo 141-8562 (JP); KIKUCHI, Jun, Shinagawa-ku,, Tokyo 141-8562 (JP); MIYAZAKI, Jun, Shinagawa-ku,, Tokyo 141-8562 (JP); HIRAMATSU, Kenya, Shinagawa-ku,, Tokyo 141-8562 (JP)
(74) Representative: Takeuchi, Maya

(57) **Abstract**

A point-of-sale (POS) terminal includes a first display configured to display a first screen on which a plurality of keys respectively corresponding to a plurality of functions is arranged, a second display configured to display a second screen on which at least one key corresponding to a predetermined number or less of the plurality of functions is arranged, and a processor configured to execute functions corresponding to keys selected through the first screen and the second screen.

## Description

### FIELD

The present invention relates to the field of image processing technologies in general, and embodiments described herein relate in particular to a point-of-sale terminal.

### BACKGROUND

A point-of-sale (POS) terminal operated by a store clerk is placed in a store checkout region of, for example, a supermarket. The POS terminal executes, depending on input operations of the store clerk, various processing relating to a checkout job in addition to registration processing of commodities to be purchased by a customer and a settlement processing of the commodities to which the registration processing is carried out. In general, a touch panel which can receive the input operations by the store clerk and display processing contents, and a hardware keyboard which is provided with a plurality of keys are arranged on the POS terminal. The store clerk can execute a required process by operating a key (or button) displayed on the touch panel or a key of the keyboard depending on various situations in the checkout job.

Normally, a plurality of keys respectively corresponding to multiple functions is arranged on the touch panel, and specific functions are assigned to a plurality of keys on the keyboard as well. Thus, the store clerk is required to understand the key arrangement of the touch panel and the keyboard as well as functions assigned to respective keys.

Incidentally, the work environment in the distribution retail industry has changed significantly. Store clerks have increased who are not familiar with the operation of the POS terminal, such as part-timers, foreign workers, elderly people. However, for such store clerks, it takes a long time for them to get used to operations of the POS terminal. Further, in a case in which store clerks need to operate the POS terminal before mastering the operations thereof, the store clerks may become confused as to the location of a key to be operated and thus may press the wrong key.

To solve such problem, there is provided a point-of-sale (POS) terminal, comprising:
a first display configured to display a first screen on which a plurality of keys respectively corresponding to a plurality of functions is arranged;
a second display configured to display a second screen on which at least one key corresponding to a predetermined number or less of the plurality of functions is arranged; and
a processor configured to execute functions corresponding to keys selected through the first screen and the second screen.

Preferably, the processor is further configured to change a function corresponding to a key arranged on the second screen depending on a state of a process being executed in response to an input operation on a key arranged on the first screen.

Preferably still, the processor is further configured to determine a language spoken by an operator, and controls the second display to display a function name of a key arranged on the second screen in a language of the operator.

Preferably yet, the processor is configured to determine the language of the operator when the operator logs into the POS terminal.

Suitably, in response to a successful login by an operator, the processor is configured to determine whether or not the second screen is displayed on the second display for the operator.

Suitably still, the processor is configured to refer to a table that stores data as to whether or not the second screen is displayed on the second display for different operators, to determine whether or not the second screen is displayed on the second display for the operator who logged in.

Suitably yet, the table is also determined to indicate a language spoken by each of the different operators, and the second screen is displayed in the language spoken by the operator who logged in if the language spoken by the operator who logged in is different from a language displayed in the first screen.

Typically, a display area of a key displayed on the second screen is configured to be larger than that of a key displayed on the first screen.

Typically still, a display area of the first display is configured to be larger than a display area of the second display.

The invention also relates to a method of executing functions in a point-of-sale (POS) terminal having first and second displays, the method comprising steps of:
displaying a first screen on which a plurality of keys respectively corresponding to a plurality of functions is arranged;
displaying a second screen on which at least one key corresponding to a predetermined number or less of the plurality of functions is arranged; and
executing functions corresponding to keys selected through the first screen and the second screen.

Preferably, the method further comprises step of:
changing a function corresponding to a key arranged on the second screen depending on a state of a process being executed in response to an input operation on a key arranged on the first screen.

Preferably still, the method further comprises steps of:
determining a language spoken by an operator; and
displaying a function name of a key arranged on the second screen in a language of the operator.

Preferably yet, the method further comprises step of:
determining the language of the operator when the operator logs into the POS terminal.

Suitably, the method further comprises step of:
determining whether or not the second screen is displayed on the second display for the operator, in response to a successful login to the POS terminal by an operator.

Suitably still, the method further comprises step of:
performing a look-up of a table that stores data as to whether or not the second screen is to displayed on the second display for different operators, to determine whether or not the second screen is displayed on the second display for the operator who logged in.

Suitably yet, in the above method, the table also indicates a language spoken by each of the different operators, and the second screen is displayed in the language spoken by the operator who logged in if the language spoken by the operator who logged in is different from a language displayed in the first screen.

Typically, in the above method, a display area of a key displayed on the second screen is larger than that of a key displayed on the first screen.

Typically still, in the above method, a display area of the first display is larger than a display area of the second display.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective view illustrating an appearance of a commodity sales data processing apparatus according to an embodiment;
Fig. 2 is a diagram illustrating an example of a combination keyboard according to the present embodiment;
Fig. 3 is a block diagram of the commodity sales data processing apparatus according to the present embodiment;
Fig. 4 is a diagram illustrating a part of data set in a cashier table according to the present embodiment;
Fig. 5 is a flowchart illustrating operations of the commodity sales data processing apparatus according to the present embodiment;
Fig. 6 is a flowchart illustrating the operations of the commodity sales data processing apparatus according to the present embodiment;
Fig. 7 is a diagram illustrating an example of a registration screen according to the present embodiment;
Fig. 8 is a diagram illustrating an example of a first auxiliary screen displayed on a touch panel according to the present embodiment;
Fig. 9 is a diagram illustrating an example of a second auxiliary screen displayed on the touch panel according to the present embodiment; and
Fig. 10 is a diagram illustrating an example of the second auxiliary screen based on English display displayed on the touch panel according to the present embodiment.

### DETAILED DESCRIPTION

In accordance with an embodiment, a POS terminal includes a first display configured to display a first screen on which a plurality of keys respectively corresponding to a plurality of functions is arranged, a second display configured to display a second screen on which at least one key corresponding to a predetermined number or less of the plurality of functions is arranged, and a processor configured to execute functions corresponding to keys selected through the first screen and the second screen.

Hereinafter, the present embodiment is described with reference to the accompanying drawings

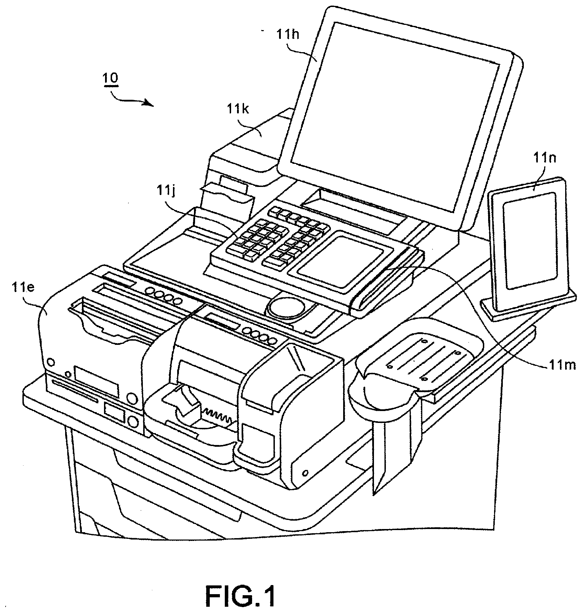

Fig. 1 is a perspective view illustrating an appearance of a POS terminal, depicted as a commodity sales data processing apparatus 10, according to the present embodiment. The commodity sales data processing apparatus 10 is a part of a store checkout system used in a store such as a supermarket.

As shown in Fig. 1, the commodity sales data processing apparatus 10 is provided with a change machine 11e, a first touch panel 11h, a combination keyboard 11j (a keyboard 11ja, a second touch panel 11jb), a printer 11k, a card reader/writer 11m, and a display 11n.

In the commodity sales data processing apparatus 10, first touch panel 11h, the combination keyboard 11j, the printer 11k and the display 11n are detachable with respect to a housing. However, the commodity sales data processing apparatus 10 may be configured to include less than all of the first touch panel 11h, the combination keyboard 11j, the printer 11k and the display 11n, according to its usage in the store.

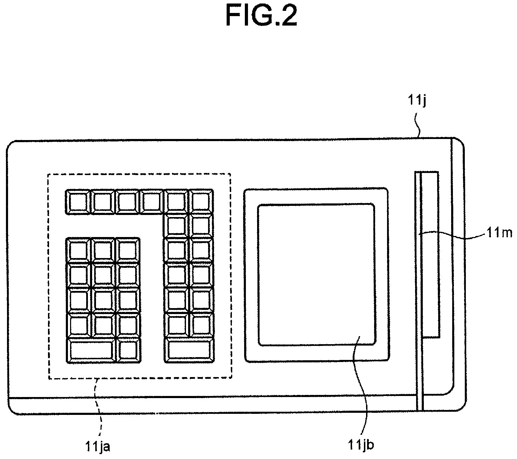

For example, the combination keyboard 11j has a form of only a keyboard mounted with more keys instead of the second touch panel 11jb in addition to a form provided with the keyboard 11ja and the second touch panel 11jb as shown in Fig. 1 and Fig. 2. Further, only the first touch panel 11h but not the combination keyboard 11j may be used as an input device. In the present embodiment, the combination keyboard 11j is provided with the keyboard 11ja and the second touch panel 11jb as shown in Fig. 2.

In the same way, the display 11n can include any one from a plurality of units having different screen sizes. Further, the touch panel can also be mounted instead of the display 11n so as to receive an input operation by a customer.

Furthermore, in the present embodiment, operation screens with keys are displayed on the first touch panel 11h and the second touch panel 11jb, and a touch operation is carried out on the panels; however, other input operations may be carried out. For example, depending on the operation screens displayed on the first touch panel 11h and the second touch panel 11jb, it is also possible to operate the keyboard 11ja by pressing a key or by specifying with voice commands. In this case, a display may be arranged instead of the first touch panel 11h or the second touch panel 11jb, and an operation screen may be displayed.

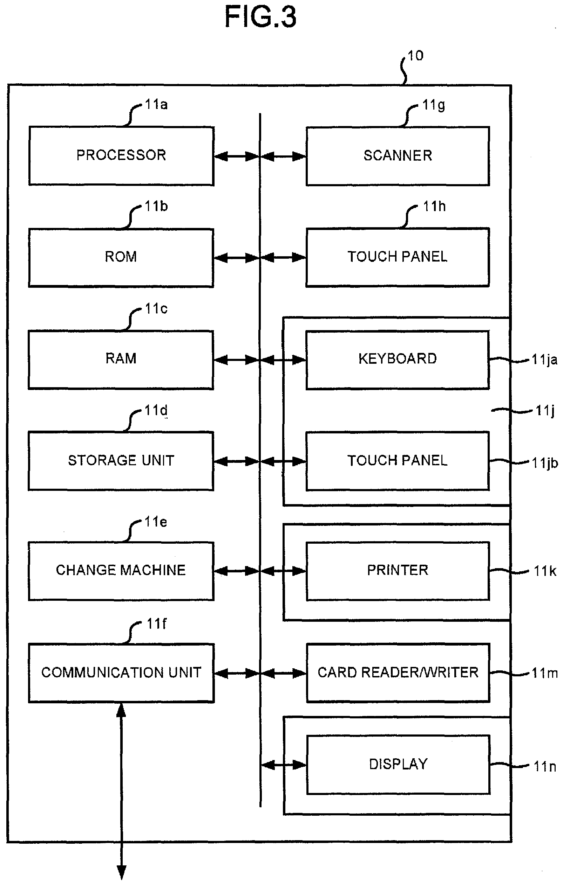

Fig. 3 is a block diagram illustrating a constitution of the commodity sales data processing apparatus 10 according to the present embodiment.

The commodity sales data processing apparatus 10 includes a processor (e.g., CPU (Central Processing Unit)) 11a, a ROM (Read-only Memory) 11b, a RAM (Random-access Memory) 11c, a storage unit 11d, the change machine 11e, a communication unit 11f, a scanner 11g, the first touch panel 11h, the combination keyboard 11j (the keyboard 11ja, the second touch panel 11jb), the printer 11k, the card reader/writer 11m, and the display 11n.

The processor 11a is a circuit for controlling various sections for implementing various operations of the commodity sales data processing apparatus 10 on the basis of an operating system, a middleware and an application program stored in the ROM 11b and the RAM 11c.

The ROM 11b and the RAM 11c record data required to execute various processing as well as various programs executed by the processor 11a. For example, a registered commodity table is recorded when a registration process is executed. In the table, commodity information is registered. In the RAM 11c, such information as data of screens displayed on the first touch panel 11h and the second touch panel 11jb, and a cashier table for determining a store clerk (cashier) who carries out a login operation in order to operate the commodity sales data processing apparatus 10 are stored in the RAM 11c.

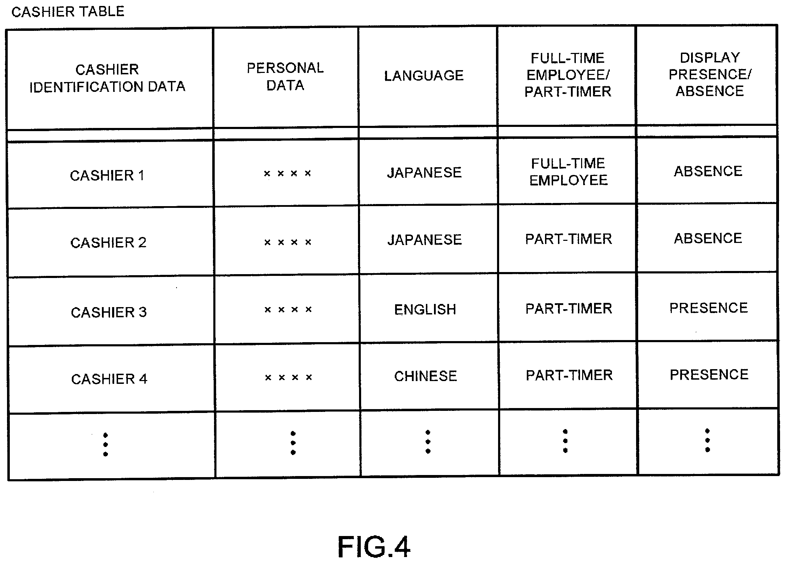

Fig. 4 is an example of the cashier table according to the present embodiment. In addition to personal data such as the full name and the age, the first language is set in the cashier table in association with cashier identification data uniquely given to each store clerk (cashiers) as shown in Fig. 4. Further, it is also possible that data indicating a full-time employee, a part-timer, and display presence/absence of an operation screen on the second touch panel 11jb is set in the cashier table.

The program executed by the processor 11a includes a control program for executing a scan processing which inputs information of commodities (commodity codes) through the scanner 11g, a registration processing which generates transaction information used in a settlement processing corresponding to the information of commodities registered in the registered commodity table, and the settlement processing based on the transaction information. Further, the control program executed by the processor 11a includes a sign-in processing program which determines a store clerk (cashier) who operates the commodity sales data processing apparatus 10, and an input control program which changes the operation screen of the second touch panel 11jb depending on the processing situation (for example, the scan processing, the registration processing, a closing processing) executed through an input operation corresponding to a screen displayed on the first touch panel 11h.

The processor 11a implements, on the basis of the control program, a display section which displays, on the first touch panel 11h, an operation screen (first screen) on which a plurality of keys respectively corresponding to a plurality of functions is arranged, a second display section which displays, on the second touch panel 11jb, an operation screen (second screen) on which at least one key corresponding to specific functions of a predetermined number or less among a plurality of functions executable through operations for the first touch panel 11h, and a function processing section which executes a function corresponding to a key selected through an input operation corresponding to a screen displayed on each of the first touch panel 11h and the second touch panel 11jb. Since only keys corresponding to specific functions of a determined number or less which can be executed in a processing situation are displayed on the operation screen displayed on the second touch panel 11jb, an operation can be easily carried out even for store clerks (for example, part-timers, foreign workers, elderly people) who are not familiar with the operation of the commodity sales data processing apparatus 10.

The storage unit 11d stores data used by the processor 11a which carries out various processing or data generated by the processor 11a. For example, an EEPROM® (Electric Erasable Programmable Read Only Memory), an HDD (Hard Disk Drive), or an SSD (Solid State Drive) can be used as the storage unit 11.

The change machine 11e receives coins and bills deposited, and discharges coins and bills as changes.

The communication unit 11f communicates with a server or another commodity sales data processing apparatus via, for example, a LAN.

The scanner 11g, for example, reads information of a commodity through optical scan to input the commodity code uniquely given to each commodity. The scanner 11g may be a fixed type or handy type two-dimensional code scanner, or may be set to a type of scanner for utilizing an image recognition technology to identify a commodity from an image of the commodity. Further, the scanner 11g may be one or more.

The first touch panel 11h is a device for carrying out the input operation by the store clerk (cashier), which includes a display device and a touch sensor. The display device may display such screen as a GUI (Graphical User Interface) screen. For example, the display device displays a registration screen (e.g., commodity summary screen) including a summary list of transaction information (a commodity name, an amount) and a subtotal amount relating to registered commodities. The display device may further display a menu including a plurality of keys respectively corresponding to various functions, and an operation screen including keys for inputting commands for instructing execution of various functions. An example of the display device is a color LCD (Liquid Crystal Display) . The touch sensor is overlaid and arranged on a display surface of the display device. The touch sensor detects a touch position of an operator to the display surface of the display device, and sends positional information thereof to the processor 11a. A well-known device can be utilized as the touch sensor.

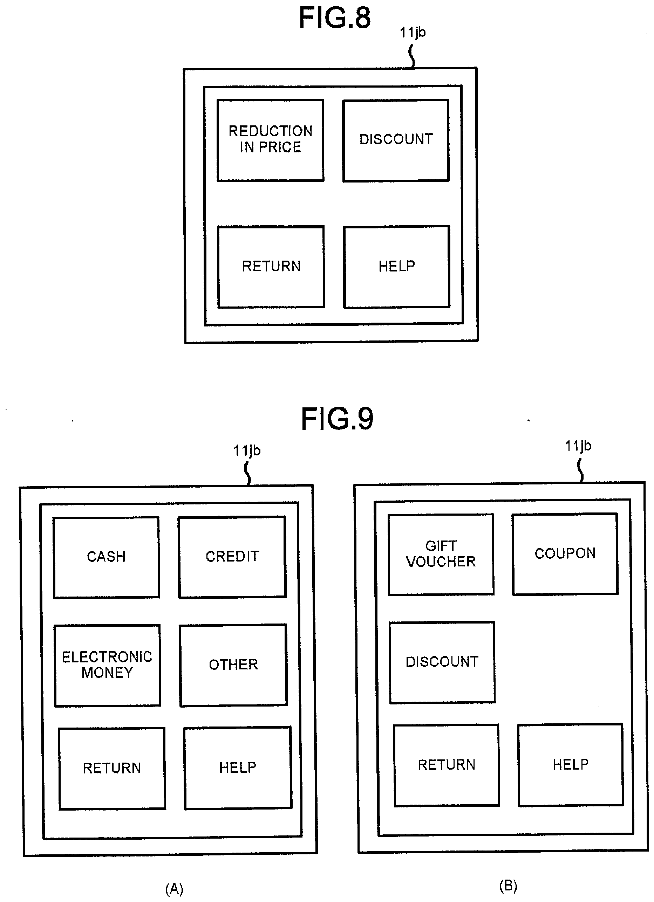

The combination keyboard 11j is a device which carries out an input operation by the store clerk (cashier), and includes the keyboard 11ja and the second touch panel 11jb arranged with a plurality of keys to which specific functions are individually assigned. The second touch panel 11jb is configured similarly to the first touch panel 11h. The second touch panel 11jb displays supplementary information which is not required to be displayed usually, and information (e.g., special sale information and a message from a store manager) which should be shared with store clerks in the store. Further, the second touch panel 11jb displays, depending on a processing situation executed by an input operation corresponding to a screen displayed on the first touch panel 11h, an operation screen on which keys corresponding to specific functions of a predetermined number (for example, 4) or less among a plurality of functions respectively corresponding to a plurality of keys arranged on an operation screen of the first touch panel 11h are arranged (refer to Fig. 8 to Fig. 10).

The printer 11k may be a thermal printer or an impact dot printer, and issues a transaction receipt on which transaction contents such as a commodity name, a unit price, a total amount and the like are printed by printing various character strings, images, code patterns (e.g., barcodes, and two-dimensional codes) on a receipt paper.

The card reader/writer 11m reads data recorded in the card and writes the data to the card. In addition to a card for settlement such as a credit card, a debit card, an electronic money card, a prepaid card and the like, various cards for recording information relating to the settlement processing, such as a membership card, a point card and the like are included. The card reader/writer 11m may be any of a magnetic type device, a contact type device and a non-contact type device, and further, may include a plurality of types of devices.

The display 11n is, for example, a device used for a customer for providing information for the customer and can utilize a well-known device such as the color LCD.

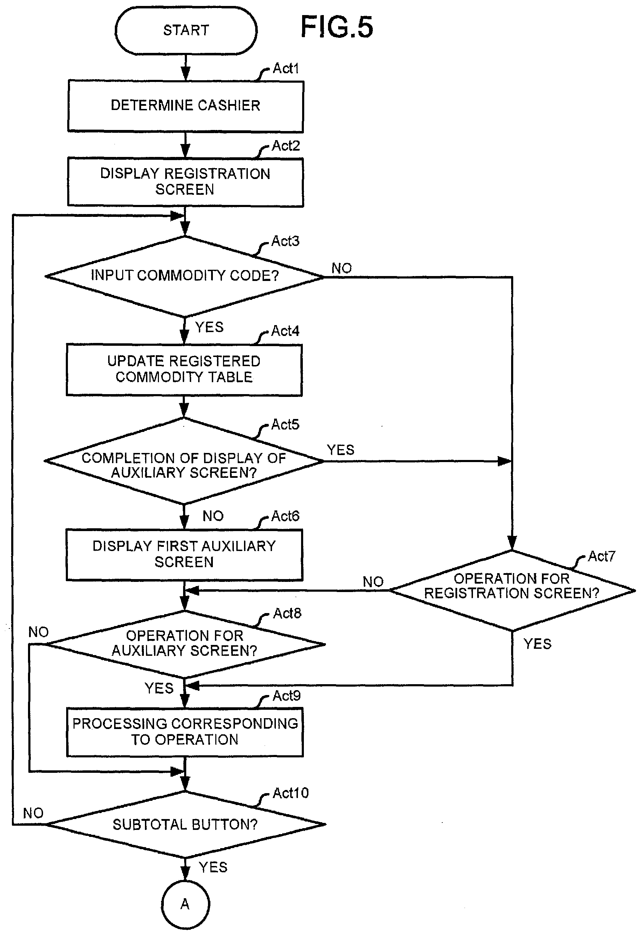

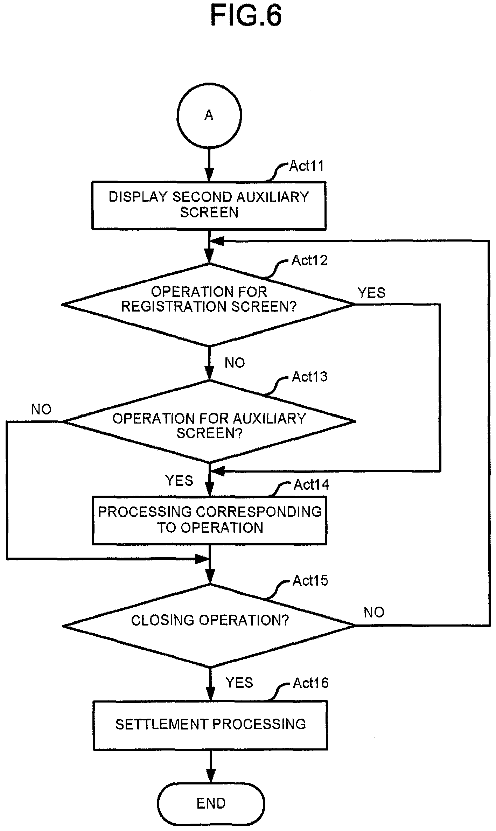

Next, operations of the commodity sales data processing apparatus 10 according to the present embodiment are described with reference to flowcharts shown in Fig. 5 and Fig. 6.

A store clerk (cashier) carries out a login operation for sign-in before starting the operation of the commodity sales data processing apparatus 10. For example, the store clerk inputs an unique code (cashier identification data) assigned to each store clerk (for example, reads a barcode through the scanner 11g). The processor 11a of the commodity sales data processing apparatus 10 executes the login processing, and identifies a store clerk who tries to operate the commodity sales data processing apparatus 10 with reference to the cashier table based on the input code (Act 1).

Herein, the processor 11a determines whether or not it is necessary to display an operation screen (hereinafter, referred to as an auxiliary screen) on the second touch panel 11jb on the basis of setting contents of the cashier table. For example, when data indicating display presence is set in the data indicating the display presence/absence of the auxiliary screen, it is determined that it is necessary to display the auxiliary screen, and setting for displaying the auxiliary screen is stored in advance. For example, the store manager assesses an ability of each store clerk to operate the commodity sales data processing apparatus 10, and the data indicating the display presence/absence of the auxiliary screen can be set in advance by the store manager.

Further, the auxiliary screen may be automatically displayed on the second touch panel 11jbif the store clerk is a part-timer. Further, in a case in which the setting for displaying the auxiliary screen is carried out, languages at the time of the display of characters representing function names corresponding to keys on the auxiliary screen are stored with reference to the data indicating a language corresponding to a store clerk.

Hereinafter, the execution of the setting for displaying the auxiliary screen is described depending on the signed-in store clerk.

The commodity sales data processing apparatus 10 starts a control processing based on the control program stored in the ROM 11b or the storage unit 11d by the processor 11a if the registration processing of commodities to be purchased is activated.

If starting the registration processing, the processor 11a clears the registered commodity table stored in the RAM 11c, and causes the first touch panel 11h to display the registration screen on the first touch panel 11h (Act 2). The registration screen is a screen for enabling the store clerk to confirm an implementation situation of the registration processing since it is used for displaying the information of commodities registered in the registered commodity table.

If it is detected that the commodity codes attached to the commodities are read from the scanner 11g through the operation of the store clerk (Yes in Act 3), the processor 11a registers the information of commodities corresponding to the commodity codes in the registered commodity table (Act 4). Thereafter, the processor 11a updates the information of commodities of the registration screen depending on the contents of the registered commodity table updated.

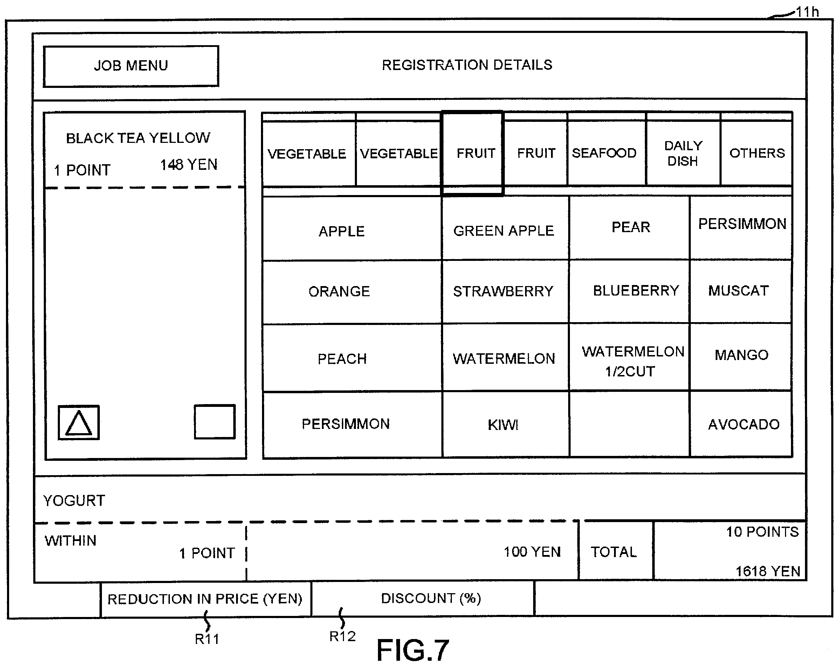

Fig. 7 is a diagram illustrating an example of the registration screen according to the present embodiment. As shown in Fig. 7, multiple keys are arranged on the registration screen displayed on the first touch panel 11h such that it is possible to select a commodity to be registered from a plurality of commodities through a direct key operation. Further, keys corresponding to other functions executable during the registration processing are arranged on the registration screen in addition to a key for the commodity registration. In Fig. 7, for example, a "reduction in price" key R1 and a "discount" key R2 are arranged. A screen on which a plurality of keys corresponding to processing contents are arranged is displayed on the first touch panel 11h.

If the display of the auxiliary screen on the second touch panel 11jb is not completed yet (No in Act 5), the processor 11a causes the second touch panel 11jb to display the auxiliary screen. Furthermore, the second touch panel 11jb displays the supplementary information which is not required to be displayed usually, and the information (e.g., special sale information and a message from a store manager) which should be shared with store clerks in the store, in a normal situation where it is not necessary to display the auxiliary screen.

Thereafter, the processor 11a displays a first auxiliary screen on which keys corresponding to a defined number of (for example, 4 or less) specific functions among a plurality of functions executable in the registration processing are arranged on the first touch panel 11h (Act 6).

Fig. 8 is a diagram illustrating an example of the first auxiliary screen displayed on the second touch panel 11jb according to the present embodiment. For example, the "reduction in price" key for carrying out a processing for reducing a price of a registered commodity from a price registered in advance, and the "discount" key for carrying out a processing for discounting the price similarly, are arranged on the first auxiliary screen. On the first auxiliary screen, the processing of the reduction in price and the discount can be executed through the key operations as necessary functions in the registration processing. Furthermore, the first auxiliary screen shown in Fig. 8 is an example, keys for executing other functions may be arranged, and three or four keys may be arranged. Further, it is possible to arrange four or less keys (functions) on the auxiliary screen in the present embodiment; however, the number of keys is not limited to four unless the number of keys confuses the store clerk who is not familiar with the operation.

As shown in Fig. 8, a predetermined number of (for example, four or less) keys that is significantly less than the number of keys arranged on the first touch panel 11h are displayed on the auxiliary screen (second screen) . In the present embodiment, a display area of the second touch panel 11jb is smaller than that of the first touch panel 11h; however, by restricting the number of keys displayed on the second touch panel 11jb, the area per key displayed on the second touch panel 11jb can be larger than that of one key displayed on the first touch panel 11h (longitudinal and lateral lengths of the key are longer than these of the key displayed on the first touch panel 11h).

Furthermore, a "return" key and an "HELP" key arranged on the first auxiliary screen are fixed keys arranged at fixed positions in common with other auxiliary screens, and are arranged independent of keys (functions) arranged on the first touch panel 11h. The "return" key is used for switching back to a previous screen, and the "HELP" key is used for asking for assistance to another store clerk.

Furthermore, when the first auxiliary screen is displayed on the second touch panel 11jb, it means the store clerk is not familiar with the operation of the commodity sales data processing apparatus 10. In this case the processor 11a may notify the customer that the store clerk cannot handle a process except the tasks corresponding to the keys arranged on the first auxiliary screen. For example, a message "Return, money exchange or refund is not acceptable at this register" may be displayed on the display 11n for customer. Furthermore, announcement may be output from a speaker (not shown), and a message may be displayed on another display arranged separately from the commodity sales data processing apparatus 10.

After that, the processor 11a adds the information of commodities corresponding to the acquired commodity codes to the registered commodity table in order each time the store clerk carries out the operation for reading the commodity codes through the scanner 11g as describe above (Act 3 and Act 4).

In a case in which the first auxiliary screen is displayed on the second touch panel 11jb, the processor 11a executes a function (processing) corresponding to an operation (Act 9) depending on each of the input operation (Yes in Act 7) for the registration screen displayed on the first touch panel 11h and the input operation (Yes in Act 8) for the first auxiliary screen of the second touch panel 11jb. In case of the store clerk who is not familiar with the operation of the commodity sales data processing apparatus 10, the registration processing may be carried out only by operating the first auxiliary screen. Further, the first auxiliary screen is displayed; however, in case of a store clerk who knows well of the operation for the registration screen of the first touch panel 11h (who is determined to be the store clerk who is not familiar with the operation), it is also possible to execute the registration processing by optionally selecting any of the first touch panel 11h and the second touch panel 11jb.

In this way, after at least one commodity is registered, the processor 11a generates the transaction information for the settlement processing relating to the commodities registered in the registered commodity table on the basis of the contents registered in the registered commodity table if it is detected that, for example, a subtotal button is operated (Yes in Act 10) .

The processor 11a causes the first touch panel 11h to display a subtotal screen including information such as a list of registered commodities, and a total number and a total amount of the commodities registered. Further, when a checkout button arranged on the subtotal screen is operated, the processor 11a starts the closing processing after ending the registration processing.

The processor 11a causes the second touch panel 11jb to display the auxiliary screen of the current processing situation thereon if starting the closing processing. Since the current processing situation is in the closing processing, the processor 11a causes the first touch panel 11h to display a second auxiliary screen (second screen) on which keys corresponding to a defined number of (for example, 4 or less) specific functions among a plurality of functions executable in the closing processing are arranged(Act 11).

Fig. 9 (A) is a diagram illustrating an example of the second auxiliary screen displayed on the second touch panel 11jb according to the present embodiment. A "cash" key, a "credit" key and an "electronic money" key for setting, a payment method and instructing the execution of the settlement processing, and an "other" key for displaying a key for executing other functions are arranged on the second auxiliary screen.

It is possible to execute, through the key operation, a processing for selecting a payment method to start the settlement processing as a necessary function (processing) in the closing processing.

When the second auxiliary screen is displayed on the second touch panel 11jb, the processor 11a executes a function corresponding to an operation (Act 14) depending on each of the input operation (Yes in Act 12) for the registration screen displayed on the first touch panel 11h and the input operation (Yes in Act 13) for the second auxiliary screen of the second touch panel 11jb. When the "other" key is pressed on the second auxiliary screen, the processor 11a causes to display a sub-screen of the second auxiliary screen as shown in Fig. 9 (B) . Keys respectively corresponding to "gift voucher", "coupon" and "discount" which are necessary for change of the subtotal amount in the closing processing are arranged on the sub-screen. It is possible to recalculate the subtotal amount corresponding to each of the keys through the operation thereof.

Furthermore, the second auxiliary screen shown in Fig. 9 (A) and Fig. 9(B) is an example, and similarly with the first auxiliary screen, keys for executing other functions may be arranged, or a different number of keys less than four. However, the first and the second auxiliary screen (including the sub-screen) have the same layout of keys, and the store clerk easily remembers the arrangement of keys. In this way, even for the store clerk who is not familiar with the operation, positions of keys which should be operated can be easily grasped, and the wrong key operation can be avoided.

If any of the "cash" key, the "credit" key and the "electronic money" key is operated (Yes in Act 15), the processor 11a executes the settlement processing with a corresponding payment method (Act 16).

So far, an example has been introduced where the language used by the store clerk is English on the first auxiliary screen and the second auxiliary screen. However, if the data indicates any specific language as to a store clerk, the auxiliary screen may be displayed with the corresponding language retrieved from this data.

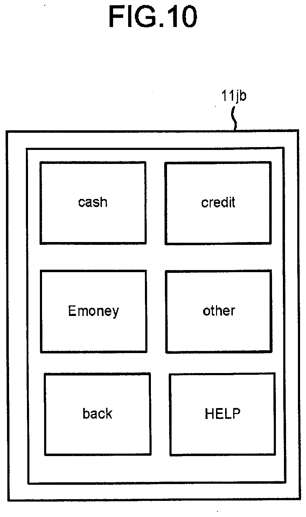

For example, when "Japanese" is set as the language corresponding to the store clerk, the processor 11a causes the second auxiliary screen to display in Japanese as shown in Fig. 10. For example, a " 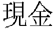 " key is displayed instead of the "cash" key, and a " 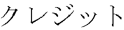 " key is displayed instead of the "credit" key.

In this way, by changing the language of characters used on the auxiliary screen depending on the store clerk, even if the store clerk is a foreign worker, a function of the auxiliary screen can be easily recognized, and a reliable operation becomes possible.

Further, since the area of one key on the auxiliary screen displayed on the second touch panel 11jb is larger than that of the key displayed on the first touch panel 11h, the function assigned to each key can be easily determined, and further, it is possible to reduce wrong key operations.

In this way, in the commodity sales data processing apparatus 10 according to the present embodiment, the auxiliary screen on which keys corresponding to a defined number of specific functions among a plurality of functions executable on the first touch panel 11h are arranged is displayed on the second touch panel 11jb arranged , and a processing corresponding to an operation for the auxiliary screen can be executed. Since only requisite functions are arranged on the auxiliary screen depending on the situation, it is possible to carry out a suitable operation even for the store clerk who is not familiar with the operation.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

Further, a processing described in the above-mentioned embodiment can be written in a recording medium, for example, a magnetic disk (flexible disk, hard disk and the like), an optical disk (CD-ROM, DVD and the like), and semiconductor memory as a program which can be executed by a computer to be provided for various devices. Further, it is also possible to transmit the program through a communication medium to be provided for various devices. The computer reads the program recorded in the recording medium, or receives the program via the communication medium, and executes the processing described above by controlling operations through this program.

## Claims

1. A point-of-sale (POS) terminal, comprising:
a first display configured to display a first screen on which a plurality of keys respectively corresponding to a plurality of functions is arranged;
a second display configured to display a second screen on which at least one key corresponding to a predetermined number or less of the plurality of functions is arranged; and
a processor configured to execute functions corresponding to keys selected through the first screen and the second screen.

2. The POS terminal according to claim 1, wherein
the processor is further configured to change a function corresponding to a key arranged on the second screen depending on a state of a process being executed in response to an input operation on a key arranged on the first screen.

3. The POS terminal according to claims 1 or 2, wherein
the processor is further configured to determine a language spoken by an operator, and controls the second display to display a function name of a key arranged on the second screen in a language of the operator.

4. The POS terminal according to claim 3, wherein the processor is further configured to determine the language of the operator when the operator logs into the POS terminal.

5. The POS terminal according to any one of claims 1 to 4, wherein
in response to a successful login by an operator, the processor is further configured to determine whether or not the second screen is displayed on the second display for the operator.

6. The POS terminal according to claim 5, wherein
the processor is further configured to refer to a table that stores data as to whether or not the second screen is displayed on the second display for different operators, to determine whether or not the second screen is displayed on the second display for the operator who logged in.

7. The POS terminal according to claim 6, wherein the table is also configured to indicate a language spoken by each of the different operators, and the second screen is displayed in the language spoken by the operator who logged in if the language spoken by the operator who logged in is different from a language displayed in the first screen.

8. The POS terminal according to any one of claims 1 to 7, wherein
a display area of a key displayed on the second screen is configured to be larger than that of a key displayed on the first screen.

9. The POS terminal according to any one of claims 1 to 8, wherein
a display area of the first display is configured to be larger than a display area of the second display.

10. A method of executing functions in a point-of-sale (POS) terminal having first and second displays, the method comprising steps of:
displaying a first screen on which a plurality of keys respectively corresponding to a plurality of functions is arranged;
displaying a second screen on which at least one key corresponding to a predetermined number or less of the plurality of functions is arranged; and
executing functions corresponding to keys selected through the first screen and the second screen.

11. The method according to claim 10, further comprising step of:
changing a function corresponding to a key arranged on the second screen depending on a state of a process being executed in response to an input operation on a key arranged on the first screen.

12. The method according to claims 10 or 11, further comprising steps of:
determining a language spoken by an operator; and
displaying a function name of a key arranged on the second screen in a language of the operator.

13. The method according to claim 12, further comprising step of:
determining the language of the operator when the operator logs into the POS terminal.

14. The method according to any one of claims 10 to 13, further comprising step of:
determining whether or not the second screen is displayed on the second display for the operator, in response to a successful login to the POS terminal by an operator.

15. The method according to claim 14, further comprising step of:
performing a look-up of a table that stores data as to whether or not the second screen is to displayed on the second display for different operators, to determine whether or not the second screen is displayed on the second display for the operator who logged in.
